# EUROPEAN PATENT APPLICATION

(11) **EP 2 400 786 A1**
(43) Date of publication of application: **28.12.2011**
(21) Application number: 09842098.7
(22) Date of filing: 02.11.2009
(51) Int. Cl.: H04W 4/06

(54) **CONFIGURATION METHOD AND CONFIGURATION DEVICE FOR THE BACKHAUL LINK IN A LONG TERM EVOLUTION SYSTEM**

(30) Priority: 23.03.2009 CN 200910080653
(71) Applicant: ZTE Corporation, Shenzhen, Guangdong 518057 (CN)
(72) Inventor: WANG, Bin, Guangdong 518057 (CN); BI, Feng, Guangdong 518057 (CN); LIANG, Feng, Guangdong 518057 (CN); MA, Zijiang, Guangdong 518057 (CN)
(74) Representative: UEXKÜLL & STOLBERG
(86) International application number: PCT/CN2009/074751
(87) International publication number: WO 2010/108364

(57) **Abstract**

The present invention provides a configuration method for a backhaul link in a Long Term Evolution (LTE) system, and the method includes: when a network side configures a relay subframe, configuring the relay subframe to be a Multicast Broadcast Single Frequency Network (MBSFN) subframe on a downlink access link, configuring a relay subframe to be a unicast subframe or non-MBSFN subframe on a downlink backhaul link. And meanwhile, the present invention provides a configuration device for the backhaul link in the LTE system, which includes: a configuration unit for configuring a relay subframe to be a unicast subframe or non-MBSFN subframe on a downlink backhaul link when a relay subframe is configured by the network side and configured to be an MBSFN subframe on a downlink access link. The present invention improves the communication efficiency of the backhaul link and the access flexibility of UE in the cell covered by the base station.

## Description

### TECHNICAL FIELD

The present invention relates to a configuration technology for a backhaul link in a Long Term Evolution (LTE) system, particularly to a configuration method and a configuration device for the backhaul link in the LTE system.

### BACKGROUND

Relay technology receives more and more attention as an emerging technology, which is viewed as the key technology of B3G (Beyond 3G)/4G. Since a future wireless communication or cellular system is required to increase a coverage area and support higher-speed transmission, a new challenge is proposed for the wireless communication technology. Meanwhile, the problem of fee for constructing and maintaining the system becomes more outstanding. With the increase in transmission rate and communication distance, the energy consumption problem of a battery of User Equipment (UE) also becomes more outstanding. Furthermore, since the future wireless communication will employ a higher frequency, the resultant path loss attenuation becomes more serious. Through the relay technology, a traditional single-hop link can be divided into multiple multi-hop links, thus shortening the communication distance between UE and a network node. The shortening of the communication distance can greatly reduce a path loss, facilitate improving the transmission quality of a communication link and expanding a communication range, therefore providing faster and better services for the UE.

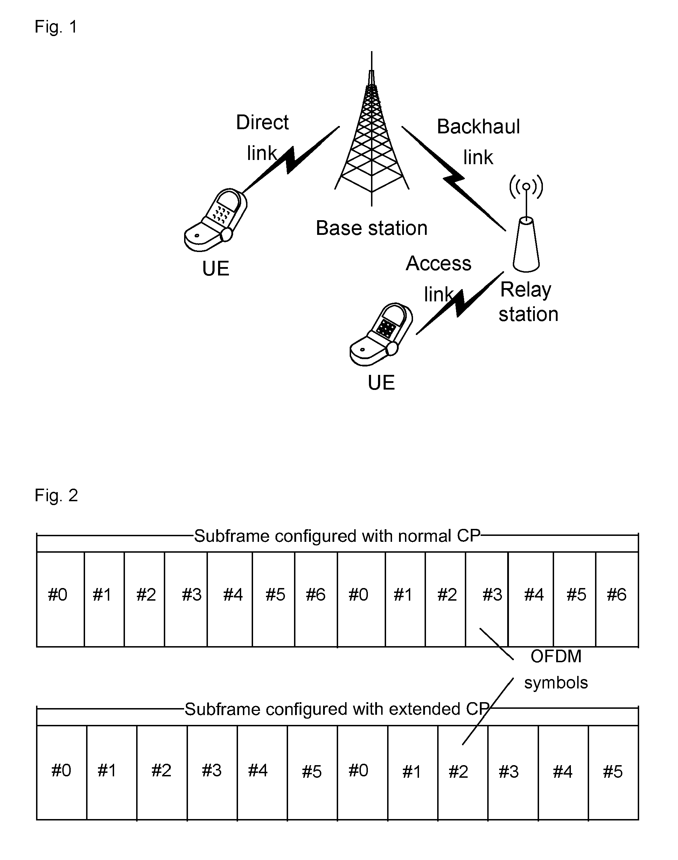

Fig. 1 is a schematic diagram of a composition structure of a relay network. As shown in Fig. 1, in the relay network, uplink data are sent by UE to a Relay Station (RS), then transmitted by the RS (also called a relay node) to a base station (Node B or eNodeB); downlink user data are sent by the base station to the RS, then transmitted by the RS to the UE. A link between the UE and the RS is called an access link, a link between the RS and the base station is called a backhaul link, and a link between UE served directly by the base station and the base station is called a direct link.

When the backhaul link, the access link and the direct link all works on a same frequency, they are called In Band Relay. Generally, at the same time of receiving a transmitted signal from the base station, the RS also transmits a signal to the UE, such that interference will be created between a transmitting end and a receiving end of the RS itself, which results in a serious deterioration of communication quality. As a result, when the RS is in data communication with the base station, the RS cannot transmit data to a cell under its control at the same time, that is to say, the RS cannot transmit and receive data in one subframe simultaneously. These special subframes for information interaction between the RS and the base station are called relay subframes, including uplink relay subframes and downlink relay subframes, wherein the uplink relay subframes are arranged for the RS to transmit data to the base station, at this moment the UE cannot transmit uplink data to the RS; while the downlink relay subframes are arranged for the RS to receive data from the base station, wherein the UE is not notified to receive the data in the subframes.

As a result, a network side needs to perform configuration of a relay subframe and notify the RS of configuration information of the relay subframe's position, then the RS notifies the UE not to receive a data region's signal from the RS in this relay subframe. The above network side refers to a network node selected from a group consisting of an eNodeB, a Node B, an RS, a Public Data Network Gateway (P-GW), a Serving Gateway (S-GW), a Mobility Management Entity (MME), etc. At present, there has been a Multicast Broadcast Single Frequency Network (MBSFN) subframe in a Long Term Evolution Advanced (LTE-Advanced) network, legacy UE receives data only on first one or two Orthogonal Frequency Division Multiplexing (OFDM) symbols of the MBSFN subframe; the first one or two OFDM symbols are also called a unicast region of the MBSFN subframe, while the UE does not receive data on other OFDM symbols of the MBSFN subframe. Therefore, in consideration of compatibility with the legacy UE and reducing overheads, at a relay subframe, the LTE-Advanced system configures an MBSFN subframe for a downlink access link. In this way, time slots within the MBSFN subframe except the first one or two symbols form a relay time slot, in which the UE does not have to receive data from the RS, and the RS notifies the UE of configuration information of the MBSFN subframe's position via a system information message.

Fig. 2 is a structural schematic diagram of a unicast subframe under two CP configurations. As shown in Fig. 2, to reduce the interference among symbols, a Cyclic Prefix (CP) needs to be added to the time domain of an OFDM symbol. The CP is classified into a normal CP and an extended CP. The extended CP is longer than the normal CP in time length, therefore within one subframe, if extended CPs are configured, then totally 12 OFDM symbols can be arranged for transmitting data, and if normal CPs are configured, then totally 14 OFDM symbols can be arranged for transmitting data, specifically as follows: for a unicast subframe with a normal CP configuration, the CP is 160Ts in length with respect to No. 0 OFDM symbol and the CPs are 144Ts in length respectively with respect to OFDM symbols from No. 1 to No. 6; for a unicast subframe with an extended CP configuration, the CPs are 512Ts in length respectively with respect to OFDM symbols from No. 0 to No. 5, wherein Ts is 1/30720 milliseconds.

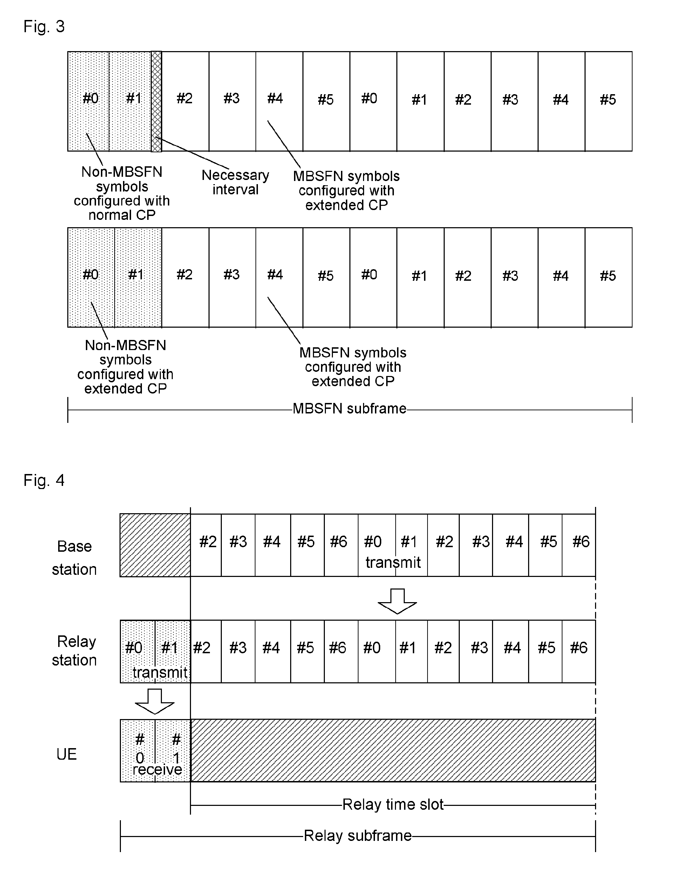

Fig. 3 is a structural schematic diagram of an MBSFN subframe. As shown in Fig. 3, in an existing protocol, a configuration requirement for an MBSFN subframe structure is to reserve first one or two OFDM symbols within the MBSFN subframe as non-MBSFN symbols to perform non-MBSFN transmission, and to employ a same CP configuration for the first one or two non-MBSFN symbols as that for No. 0 subframe, i.e. the CP configuration possibly being a normal CP configuration or an extended CP configuration; and to perform MBSFN transmission on the remaining OFDM symbols, which are called MBSFN symbols within the MBSFN subframe; and further to employ the extended CP configuration for the MBSFN symbols in order to facilitate synchronization and macro diversity. When the non-MBSFN symbols adopt the normal CP configuration, a necessary guard time interval is required between the non-MBSFN symbols and the MBSFN symbols; while when the non-MBSFN symbols adopt the extended CP configuration, the guard time interval is not required between the non-MBSFN symbols and the MBSFN symbols. Here, the non-MBSFN subframes can be other subframes not carrying an MBMS service, such as unicast subframes, etc.

It can be seen from the structure features of the MBSFN subframe that, when an MBSFN subframe is configured for a downlink access link, the RS will transmit a signal to the UE on a non-MBSFN symbol of the MBSFN subframe, and receive a signal from the base station on an MBSFN symbol rather than transmit a signal to the UE, thereby avoiding the interference between the transmitting end and the receiving end of the RS itself.

In the LTE system, the purpose of configuring some subframes on a downlink access link to be MBSFN subframes is for backward compatibility with UE. Relevant protocols do not refer to the type of subframes that corresponding subframes on a downlink backhaul link (namely relay subframes) are configured to be, when some subframes on the downlink access link are configured to be MBSFN subframes.

### SUMMARY

In view of this, the present invention mainly aims to provide a configuration method and a configuration device for a backhaul link in an LTE system, for solving the problem of configuring a subframe type for a relay subframe on a downlink backhaul link.

To achieve the above objective, the technical solution of the present invention is realized as follows.

A configuration method for a backhaul link in an LTE system comprises:
when a network side configures a relay subframe, configuring an MBSFN subframe on a downlink access link, and configuring a unicast subframe or non-MBSFN subframe on a downlink backhaul link.

Preferably, the method may further comprise:
notifying an RS and/or UE residing in a cell of a base station of configuration information that the relay subframe is configured to be a unicast subframe or non-MBSFN subframe on the downlink backhaul link by the base station via a system information message or dedicated signaling; notifying UE residing under the RS of configuration information that the relay subframe is configured to be an MBSFN subframe on the downlink access link by the RS via a system information message or dedicated signaling.

Preferably, the system information message may be any one of a Master Information Block (MIB), System Information Block 1 (SIB1), SIB2, SIB3, SIB4, SIB5, SIB6, SIB7, SIB8, SIB9, SIB10, SIB11 and a new added SIB.

Preferably, the method may further comprise:
on the relay subframe, monitoring the whole subframe of the downlink backhaul link by the UE residing in the cell of the base station; monitoring other OFDM symbols within the subframe of the downlink backhaul link except first one or two OFDM symbols by the RS; monitoring only first one or two OFDM symbols within the subframe of the downlink access link by the UE residing under the RS.

A configuration device for a backhaul link in an LTE system comprises:
a configuration unit for configuring a relay subframe to be an MBSFN subframe on a downlink access link, and configuring a relay subframe to be a unicast subframe or non-MBSFN subframe on a downlink backhaul link.

Preferably, the device may further comprise:
a notification unit for notifying an RS and/or UE residing in a cell of a base station of configuration information that the relay subframe is configured to be a unicast subframe or non-MBSFN subframe on the downlink backhaul link via a system information message or dedicated signaling; and notifying UE residing in a cell of the RS of configuration information that the relay subframe is configured to be an MBSFN subframe on the downlink access link via a system information message or dedicated signaling.

Preferably, the system information message may be any one of an MIB, SIB1, SIB2, SIB3, SIB4, SIB5, SIB6, SIB7, SIB8, SIB9, SIB10, SIB11 and a new added SIB.

In the present invention, when, on a relay subframe, the network side configures an MBSFN subframe for the downlink access link, it configures a unicast subframe or non-MBSFN subframe for a downlink backhaul link, thus legacy UE residing in a cell of an RS can also be compatible; while for UE residing in a cell of a base station, it can communicate with the base station on the relay subframe. Since a unicast subframe or non-MBSFN subframe is employed for the backhaul link, the adoption of a short CP can improve the throughput of the backhaul link, system capacity and utilization efficiency of wireless resources, without creating direct influence on the access link, thereby guaranteeing the compatibility. The present invention improves the communication efficiency of the backhaul link and the access flexibility of the UE in the cell covered by the base station.

### BRIEF DESCRIPTION OF THE DRAWINGS

Fig. 1 is a schematic diagram of a composition structure of a relay network;
Fig. 2 is a structural schematic diagram of a unicast subframe under two CP configurations;
Fig. 3 is a structural schematic diagram of an MBSFN subframe;
Fig. 4 is a schematic diagram of downlink subframe configurations of a relay subframe in a base station and an RS of the invention; and
Fig. 5 is a schematic diagram of a composition structure of a configuration device for a backhaul link in an LTE system of the invention.

### DETAILED DESCRIPTION OF THE INVENTION

The basic idea of the present invention is that: when, on a relay subframe, a network side configures an MBSFN subframe for a downlink access link, the network side configures a unicast subframe or non-MBSFN subframe for a downlink backhaul link, thus legacy UE residing in a cell of an RS can also be compatible; while for UE residing in a cell of a base station, it can communicate with the base station on a relay subframe. Since a unicast subframe or non-MBSFN subframe is employed for the backhaul link, the adoption of a short CP can improve the throughput of the backhaul link, system capacity and utilization efficiency of wireless resources, without having direct influence on the access link, thereby guaranteeing the compatibility. The present invention improves the communication efficiency of the backhaul link and the access flexibility of UE in the cell covered by the base station.

To make the objective, technical solution and advantages of the present invention clearer, the invention is described below with reference to embodiments and accompanying drawings in detail.

Fig. 4 is a schematic diagram of downlink subframe configurations of a relay subframe in a base station and an RS of the invention. As shown in Fig. 4, a method for receiving a downlink service in an LTE system of the invention comprises following steps.

A relay subframe is configured to be an MBSFN subframe on an access link from the RS to UE, here first two OFDM symbols in the MBSFN subframe carry unicast control information of the UE, and the remaining OFDM symbols carry MBSFN multicast data information. The RS notifies the UE under the RS of pattern of the MBSFN subframe configured on the access link via broadcasting System Information Block 2 (SIB2) in a system information message. After receiving the configuration information of MBSFN subframes in the access link in the system information message, the UE residing under the RS can know which subframes are configured to be MBSFN subframes. Release 8 (Rel8) UE only monitors the unicast region of the MBSFN subframes rather than monitors the multicast region of the MBSFN subframes (here the relay node is receiving a signal of the base station and is incapable of transmitting a signal). Furthermore, higher-release UE can also know that these MBSFN subframes are corresponding to the relay subframes on the downlink access link, and do not have MBMS services, so the higher-release UE may also only monitor the unicast region of the MBSFN subframes. In the invention, the subframe carrying the unicast control information is called a unicast subframe or a non-MBSFN subframe.

UE residing in a cell of the RS may be notified of the configuration information of the MBSFN subframes of the access link by any one of a Master Information Block (MIB), SIB1, SIB3, SIB4, SIB5, SIB6, SIB7, SIB8, SIB9, SIB10, SIB11 and a new added SIB, etc. Or, the UE residing in the cell of the RS is notified of the configuration information of the MBSFN subframes by using dedicated signaling.

A relay subframe is configured to be a unicast subframe or non-MBSFN subframe on a downlink backhaul link from the base station to the RS, and there is no subframe arranged for the backhaul link among the MBSFN subframes configured by the base station. Here, first two OFDM symbols within the unicast subframe or non-MBSFN subframe carry downlink control information sent to UE residing in a cell of the base station, while the remaining OFDM symbols are arranged for carrying a downlink signal sent to the RS and/or the UE residing under the base station. The base station notifies the RS of configuration information of the relay subframe on the downlink backhaul link via dedicated signaling, and does not notify the UE residing in the cell of base station of the configuration information of the relay subframe on the backhaul link. The configuration information of the unicast subframe or non-MBSFN subframe on the downlink backhaul link is notified to the RS via SIB2, or via any one of an MIB, SIB1, SIB3, SIB4, SIB5, SIB6, SIB7, SIB8, SIB9, SIB10, SIB11 and a new-added SIB, or by dedicated signaling. If, on the backhaul link, the UE is not notified that the subframe is an MBSFN subframe, the UE will acknowledge the subframe as a unicast subframe tacitly. Then the UE residing in the cell of the base station will take the subframe on the backhaul link (including the relay subframe on the backhaul link) as a unicast subframe or non-MBSFN subframe, and the UE residing in the cell of the base station will monitor the whole unicast subframe or non-MBSFN subframe. Of course, the UE residing in the cell of the base station may also be notified of configuration information of the relay subframe on the downlink backhaul link via any one of the above system information message or dedicated signaling, here, it only needs to add a corresponding indicating bit to the notification message and modify the corresponding specification. The RS monitors the remaining OFDM symbols within the subframe on the downlink backhaul link except the first two OFDM symbols. The base station is in communication with the RS as well as with the UE residing in the cell of the base station within the relay subframe.

On the backhaul link, if configuration information of the subframe configured on the relay subframe for the downlink backhaul link does not exist in the system information message, the UE residing in the cell of the base station acknowledges the subframe of the downlink backhaul link as a unicast subframe or non-MBSFN subframe tacitly, and monitors the whole subframe of the downlink backhaul link on the relay subframe. Of course, if the specification stipulates that the UE residing in the cell of the base station is notified of the configuration type of the subframe of the downlink backhaul link via the configuration information of the subframe of the downlink backhaul link, the UE residing in the cell of the base station monitors the whole subframe of the downlink backhaul link according to the received configuration information. The RS monitors the remaining OFDM symbols within the subframe of the downlink backhaul link except the first one or two OFDM symbols according to the received configuration information of the subframe of the downlink backhaul link; while the UE residing in the cell of the RS only monitors the first one or two OFDM symbols within the subframe of the downlink access link according to the configuration information of the subframe of the downlink access link.

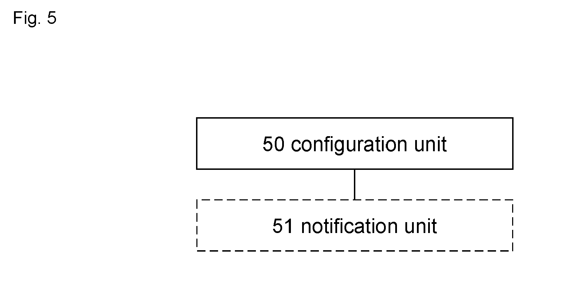

Fig. 5 is a schematic diagram of a composition structure of a configuration device for a backhaul link in an LTE system of the invention. As shown in Fig. 5, the configuration device for the backhaul link in the LTE system of the invention comprises a configuration unit 50 for configuring a relay subframe to be an MBSFN subframe on a downlink access link, and configuring a relay subframe to be a unicast subframe or a non-MBSFN subframe on a downlink backhaul link.

As shown in Fig. 5, the configuration device for the backhaul link in the LTE system of the invention further comprises a notification unit 51 for notifying an RS and/or UE residing in a cell of a base station of configuration information that a relay subframe is configured to be a unicast subframe or non-MBSFN subframe on the downlink backhaul link via a system information message or dedicated signaling; and notifying UE residing in a cell of the RS of configuration information that a relay subframe is configured to be an MBSFN subframe on the downlink access link via a system information message or dedicated signaling. The system information message is any one of an MIB, SIB1, SIB2, SIB3, SIB4, SIB5, SIB6, SIB7, SIB8, SIB9, SIB10 and SIB11, etc. Or, the system information message is any one of an MIB, SIB1, SIB2, SIB3, SIB4, SIB5, SIB6, SIB7, SIB8, SIB9, SIB10, SIB11 and a new added SIB.

Those skilled in the art should understand that, when a subframe configuration manner employed by the configuration unit 50 is unique, or is carried out in a certain stipulated way, the configuration device for the backhaul link in the LTE system of the invention may not comprise the notification unit 51. The configuration device for the backhaul link in the LTE system of the invention is designed for the configuration method for the backhaul link in the LTE system. The realization functions of respective processing units as shown in Fig. 5 may be interpreted with reference to the related description of the configuration method. The functions of respective processing units as shown in Fig. 5 may either be realized through a program running on a processor, or through a specific logic circuit.

The above is only the preferred embodiments of the present invention and not intended to limit the scope of protection of the present invention.

## Claims

1. A configuration method for a backhaul link in a Long Term Evolution (LTE) system, comprising:
when a network side configures a relay subframe, configuring a Multicast Broadcast Single Frequency Network (MBSFN) subframe on a downlink access link, and configuring a unicast subframe or non-MBSFN subframe on a downlink backhaul link.

2. The method according to claim 1, further comprising:
notifying a relay station and/or user equipment residing in a cell of a base station of configuration information that the relay subframe is configured to be a unicast subframe or non-MBSFN subframe on the downlink backhaul link by the base station via a system information message or dedicated signaling; notifying user equipment residing under the relay station of configuration information that the relay subframe is configured to be an MBSFN subframe on the downlink access link by the relay station via a system information message or dedicated signaling.

3. The method according to claim 2, wherein the system information message is any one of a Master Information Block (MIB), System Information Block (SIB)1, SIB2, SIB3, SIB4, SIB5, SIB6, SIB7, SIB8, SIB9, SIB10, SIB11 and a new added SIB.

4. The method according to claim 2, further comprising:
on the relay subframe, monitoring the whole subframe of the downlink backhaul link by the user equipment residing in the cell of the base station; monitoring other Orthogonal Frequency Division Multiplexing (OFDM) symbols within the subframe of the downlink backhaul link except first one or two OFDM symbols by the relay station; monitoring only first one or two OFDM symbols within the subframe of the downlink access link by the user equipment residing under the relay station.

5. A configuration device for a backhaul link in a Long Term Evolution (LTE) system, comprising:
a configuration unit for configuring a relay subframe to be an MBSFN subframe on a downlink access link, and configuring a relay subframe to be a unicast subframe or non-MBSFN subframe on a downlink backhaul link.

6. The device according to claim 5, further comprising:
a notification unit for notifying a relay station and/or user equipment residing in a cell of a base station of configuration information that the relay subframe is configured to be a unicast subframe or non-MBSFN subframe on the downlink backhaul link via a system information message or dedicated signaling; and notifying user equipment residing in the relay station of configuration information that the relay subframe is configured to be an MBSFN subframe on the downlink access link via a system information message or dedicated signaling.

7. The device according to claim 5 or 6, wherein the system information message is any one of an MIB, SIB1, SIB2, SIB3, SIB4, SIB5, SIB6, SIB7, SIB8, SIB9, SIB10, SIB11 and a new added SIB.
